(19) Europäisches Patentamt
European Patent Office
Office européen des brevets

(11) **EP 0 907 529 B1**

(12) **EUROPEAN PATENT SPECIFICATION**

(45) Date of publication and mention
of the grant of the patent:
**19.01.2005 Bulletin 2005/03**

(51) Int Cl.⁷: **B60R 21/18**

(21) Application number: **97935123.6**

(86) International application number:
**PCT/US1997/013118**

(22) Date of filing: **02.07.1997**

(87) International publication number:
**WO 1998/000314 (08.01.1998 Gazette 1998/01)**

(54) **INFLATABLE TUBULAR TORSO RESTRAINT SYSTEM**

AUFBLASBARES SCHLAUCHARTIGES RUMPF-RÜCKHALTESYSTEM

SYSTEME DE HARNAIS D'AUTO TUBULAIRE ET GONFLABLE

(84) Designated Contracting States:
**DE ES FR GB IT SE**

(30) Priority: **02.07.1996 US 21052 P**
**31.03.1997 US 829750**

(43) Date of publication of application:
**14.04.1999 Bulletin 1999/15**

(73) Proprietor: **Zodiac Automotive US, Inc.**
**Tempe, Arizona 85283 (US)**

(72) Inventors:
• **YANIV, Gershon**
**Scottsdale, AZ 85258 (US)**
• **ROMEO, David, J.**
**Etna, WY 83118 (US)**
• **HARDTMANN, Dirk, J.**
**Phoenix, AZ 85007 (US)**
• **BARK, Lindley, W.**
**Chandler, AZ 85226 (US)**

(74) Representative: **O'Connell, David Christopher**
**HASELTINE LAKE,**
**Redcliff Quay**
**120 Redcliff Street**
**Bristol BS1 6HU (GB)**

(56) References cited:
DE-A- 4 116 162      GB-A- 2 269 851
US-A- 3 841 654      US-A- 3 888 503
US-A- 5 390 953      US-A- 5 465 999
US-A- 5 480 181

**Description**

**BACKGROUND**

Field of the Invention.

This invention relates to a system for restraining the body of an occupant in a vehicle to reduce the extent and severity of injuries during a crash. More specifically, the invention relates to a seat belt restraint system which incorporates an inflatable tubular section in the torso section of the belt. The inflatable tubular section is made of a woven or braided tube of continuous high-strength fibers. The restraint system reduces the extent and severity of both primary and secondary injuries to vehicle occupants.

Background of the Invention.

Conventional seat belts are designed to protect the occupants of vehicles such as automobiles, trucks, vans, airplanes and helicopters from primary injuries during an accident. Primary injuries are injuries caused by the initial impact of the occupants against the interior of the vehicle. However, the protection provided by conventional seat belts against primary injuries may sometimes be inadequate. For example, slack in the seat belts may lead to unnecessarily serious primary injuries. In side impacts conventional belts do not provide occupant head protection on the struck side of the vehicle. Moreover, the seat belts themselves may often be responsible for secondary injuries, since the load from the seat belts is distributed only over small areas of the occupant's body. However, some prior art belts have tried to lessen primary injuries by incorporating an inflating mechanism into the seat belt restraint.

For example, U.S. Patent No. 5,282,648 discloses an inflatable body and head restraint system, wherein inflatable bladders are attached to the shoulder straps of a harness restraint. The bladders are stowed partially underneath and partially on top of harness straps. This configuration provides stability and prevents the bladders from rolling out of position during inflation. During a crash, the bladders inflate to protect the upper body, primarily the head and neck of the occupant.

Additionally, U.S. Patent Nos. 3,948,541 and 3,905,615 to Schulman disclose another inflatable body and head restraint system, wherein a bladder is securely affixed to shoulder straps and a lap belt. The bladder has chin, chest, and pelvic bags. Upon impact, the bladder automatically inflates to cushion the pelvic areas and to prevent forward rotation of the head. However, upon inflation the bladder tends to roll out from its position under the shoulder straps. Also, because the bladders are constricted by the harness, portions of the bladder are subjected to high pressures, which can lead to splitting of the bladder.

Simple inflatable body restraints are also disclosed in U.S. Patent Nos. 3,682,498 and 4,348,037 to W. Rutzki and B. Law et al, respectively. These patents disclose inflatable protective devices that are located in or under the seat harnesses to which they are attached. These inflatable body restraints are subject to roll-out and seam or web splitting problems.

In yet another prior art seat belt disclosed in, U.S. Patent Nos. 3,841,654 and 3,970,329 both to Lewis, a vehicle seat system which comprises a seat belt having an inflatable section is shown. When a collision is detected, the inflatable section is inflated to protect the person wearing the seat belt.

The prior art inflatable seat belt structures, such as those identified above, generally use a unitary inflatable section made from a tightly woven material, such as 420 denier nylon, which is conventional air bag material. When deployed, the inflatable section will contract in length somewhat because the inflation pressure causes it to go from a flat, generally 2-dimensional shape to a 3-dimensional cylindrical shape. However, only the ends of the inflatable section contract as they fill and assume a hemispherical shape. This causes only the ends of the inflatable section to shorten, thus shortening the overall length of the inflatable section. The fibers of the material do not change their orientation: the two sets of fibers in the material remain roughly perpendicular to each other throughout the inflation process.

In the case of the typical inflatable seat belt made of conventional air bag material as described above, the maximum theoretical amount that the inflatable structure contracts upon inflation, in an unconstrained condition prior to being loaded by the occupant, is based only on the width of the flat material. If inflation results in a relatively small cylindrical diameter then a relatively small contraction, or shortening, of the length of the seat belt will occur. The calculation for determining the amount of contraction that will occur with conventional air bag material upon inflation and in an unconstrained condition is as follows:

$$Lf - Li = X \qquad (1)$$

where:

    X is the amount of contraction
    Lf is the length of flat, uninflated, material
    Li is the length of unconstrained inflated material,

and

$$Li = Lf - (Df - Di) \qquad (2)$$

$$Di = 2/\pi \, (Df) \qquad (3)$$

$$Lf - Li = Df(1 - 2/\pi) \qquad (4)$$

where:

Df is the width (flat diameter) of flat, uninflated, material

Di is the diameter of unconstrained inflated material.

As seen in equation (4), the length reduction depends solely on the uninflated width (flat diameter) of the material.

For example, an inflatable structure having a flat diameter of 20 cm and a flat length of 100 cm has a maximum achievable contraction of 7.3 cm or roughly 7%. This degree of contraction would provide restraint that is only slightly greater, and, thus, only slightly more protective than a conventional seat belt.

The construction disclosed in U.S. Patent No. 3,888,503 to Hamilton comprises an inflatable restraining band having a series of sections, some of which are inflatable to a greater degree than others interconnecting them. In the Hamilton design, contraction occurs upon inflation only at each end of each section, and because the sections are of variable inflatable size, the amount of contraction varies along the structure. By not allowing full expansion interconnecting portions or sections of the inflatable band more hemispherical "ends" occur thus the overall band is foreshortened to a greater extent than otherwise on expansion, which causes greater tensioning of the band against the occupant restrained.

Hamilton provides greater protection than the conventional inflatable seat belt in terms of the provision of greater restraint and hence improves upon a conventional inflatable seat belt. However, the restraint that results from Hamilton's patent is still significantly less than the restraint provided by the present invention.

None of the patents described above provide the important advantage of significant contraction which occurs as a result of both inflation and construction of the woven material used in the present invention.

United States patent 5,390,953 in the name of Tanaka et al discloses the features of the precharacterising portion of claim 1.

## SUMMARY OF THE INVENTION

The present invention provides an occupant restraint system having all of the features of claim 1.

Preferred features of the invention are the subject of the dependent claims.

In order to provide superior gas retention, the braided tube may additionally contain an inner bladder.

In the uninflated state, the braided tube assumes a flat woven belt configuration and acts as a conventional seat belt system and holds the occupant in the seat. However, as the braided tube inflates, the decreasing tube length acts as a pretensioning device by drawing any slack out of the seat belt system. The shortened length of the braided tube helps greatly to further restrict subsequent occupant motion.

The inflated braided tube additionally provides a much larger restraint surface area for the occupant's body, which helps to distribute belt load forces. When the inflated braided tube is loaded by the occupant's body, it flattens slightly. This flattening increases the contact area between the body and the braided tube, thus further reducing the pressure on the occupant. In a side impact the inflated section provides occupant head protection.

The inflatable braided tube is connected to a gas generator which is in turn connected to a crash sensor. When the crash sensor detects an impact above a predetermined threshold, it sends a signal to the gas generator. The gas generator is initiated inflating the braided tube. The gas generator can be integrated within the seat back or base for sound damping purposes and/or other practical considerations.

The primary function of the present invention is to prevent or reduce the severity of primary and secondary injuries suffered by a vehicle occupant in the event of a crash, by pretensioning the restraint system, further restricting the motion of the occupant's body, and by distributing the restraint forces over a larger surface area.

Eight crash tests simulating four equivalent frontal and four equivalent side impacts were conducted to compare the restraining capability of the present invention to a conventional three-point seat belt, and to two air belt systems. The first air belt was inflated to a relative peak inflation pressure of approximately 1 bar, and the second air belt was inflated to a relative peak inflation pressure of approximately 3 bars. The results of these tests are listed in Table 1. As shown by Table 1, the first air belt shows essentially no improvement over the conventional three-point seat belt. The second air belt shows some improvement compared to a conventional three-point seat belt, *i.e.*, head displacement was reduced by fifteen centimetres (six inches) in the forward crash simulation and by 6.5 cm (2.5 inches) in the side impact simulation. Head rotation, a possible indicator of neck injuries, was also reduced. However, the restraint system manufactured according to the present invention, inflated to a peak inflated pressure of approximately 2 bars, produced the greatest improvements in occupant kinematics: head displacement was reduced by 39 cm (15.5 inches) (52 cm to 13 cm - from 20.5 inches to 5.0 inches) in the forward direction) and by 20 cm (8 inches) (from 58 cm to 38 cm - 23 inches to 15 inches) in the lateral direction. The superior performance of the present invention is due to its ability to reduce its overall length to a greater extent than prior art restraints.

Accordingly, it is an object of the present invention to provide a protective seat belt system that inflates on impact to protect the occupant of a vehicle.

It is another object of the present invention to provide a protective apparatus that restricts occupant motion during a crash.

It is another object of the present invention to provide an inflatable braided tube member that greatly shortens (by at least 10% to 30%) as it inflates to pretension the restraint system.

It is another object of the present invention to provide an inflatable braided tube that distributes crash loads over larger occupant surface area, thus minimizing pain and potential injury.

It is another object of the present invention to provide an inflatable braided tube that is not subject to roping, roll-out or seam splitting problems.

It is another objective of the present invention to provide an inflatable braided tube that pretensions with a force sufficient to counter body loading.

These and other objects of the present invention are described in greater detail in the detailed description and the appended drawings.

## BRIEF DESCRIPTION OF THE DRAWINGS

Figure 1a is a schematic diagram of a side view of the present invention in the uninflated configuration.

Figure 1b is a schematic diagram of a side view of the present invention in the inflated configuration.

Figure 1c is a schematic diagram of a front view of the present invention in the inflated configuration installed with respect to the driver-side seat of a typical automobile.

Figure 1d is a schematic diagram of cut-away rear view of the present invention in the uninflated configuration installed with respect to the driver-side seat of a typical automobile.

Figure 1e is a schematic diagram of a cut-away rear view of the present invention in the inflated configuration installed with respect to the driver side seat of a typical automobile.

Figure 2a is a schematic diagram of the braided tube of the present invention in the uninflated state.

Figure 2b is a schematic diagram of the braided tube of the present invention in the inflated state.

Figure 3a is a schematic diagram showing the relative distance of the head displacement and the degree of head rotation during equivalent simulated forward-impact crash tests in which a conventional seat belt, a first air belt inflated to a relative pressure of 1 bar, a second air belt inflated to a relative pressure of 3 bars, and the present invention during the tests summarized in Table 1.

Figure 3b is a schematic diagram showing the relative distance of the head displacement and the degree of head rotation during equivalent simulated side-impact crash tests in which a conventional seat belt, a first air belt inflated to a relative pressure of 1 bar, a second air belt inflated to a relative pressure of 3 bars, and the present invention during the tests summarized in Table 1.

## DETAILED DESCRIPTION OF THE INVENTION

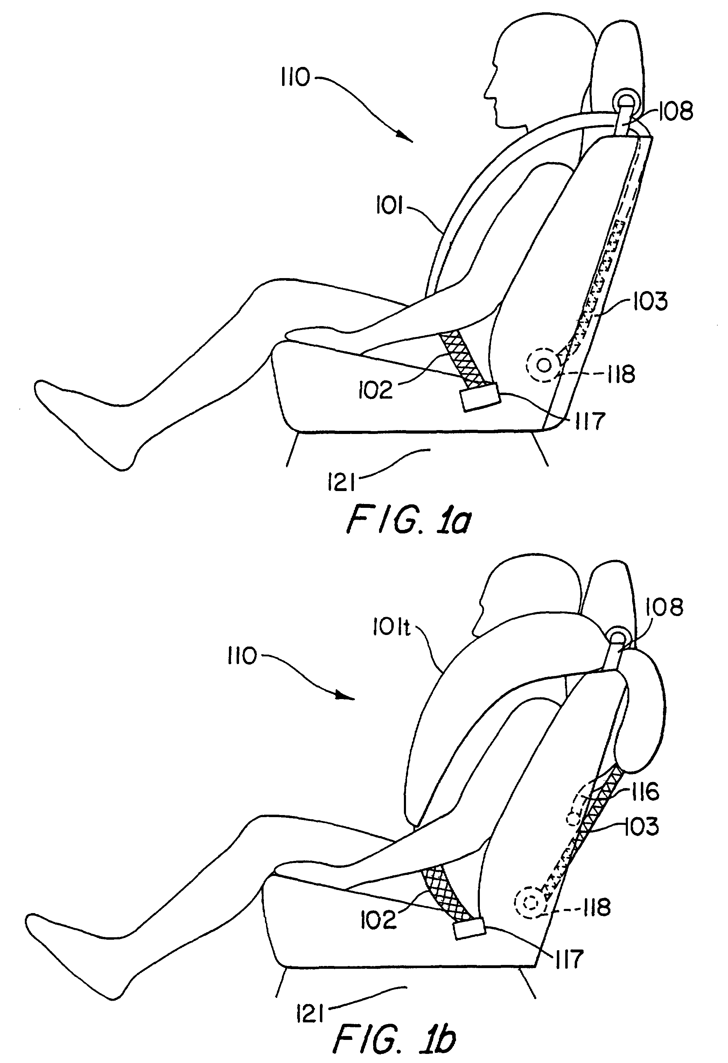

The preferred embodiment of the invention is shown in the uninflated and inflated configurations in Figures 1a through 1e installed with respect to a typical driver-side automobile seat 121. A mirror image of the invention would function equally as well on a passenger-side automobile seat.

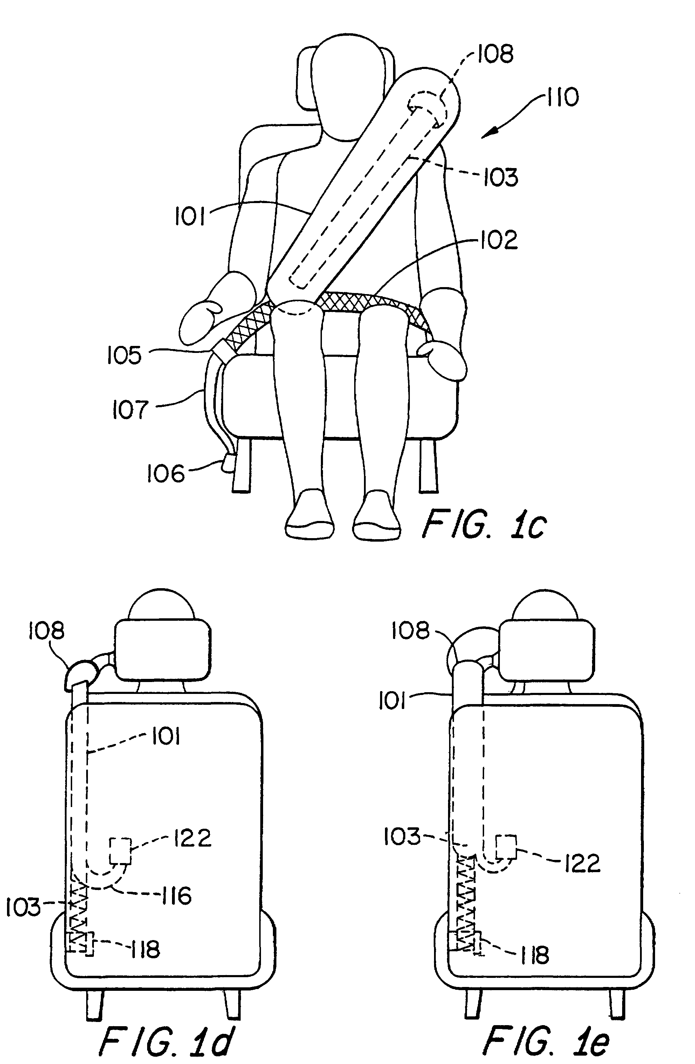

As shown in the Figures 1a-1e, the seat belt system 110 of the present invention comprises lap belt 102, shoulder or torso belt 103, including an inflatable section 101 comprising a torso portion 101t, buckle assembly 105, anchor 106, anchored inertial reels 117 and 118, gas generator 122, and sensor assembly (not shown). As shown in Figure 1c, lap belt 102 and torso belt 103 form one continuous strap which passes through the male portion of buckle assembly 105. Lap belt 102 is designed to restrict the forward motion of a seated occupant at the pelvis. The lap belt 102 is connected to anchored inertial reel 117 that pivotally mounts lap belt 102 to the floor or seat structure on the door-side of seat 121 (as shown in Figure 1a and 1b). The other end of lap belt 102 loops through the male portion of buckle assembly 105, so that the length of the lap belt 102 can be adjusted to accommodate a wide range of seated occupants. The female portion of buckle assembly 105 is attached to buckle strap 107. Buckle strap 107 is pivotally mounted to an attachment point in the vehicle, such as the base of seat 121, or a floor structure on the side of seat 121 that is furthest from the door, by anchor 106. The female and male portions of buckle assembly 105 fasten together, thus securing seat belt system 110 around the occupant in a manner similar to that used by conventional three point seat belt systems.

As shown in Figure 1d gas generator 122 is preferably mounted inside the seat back to protect it from impacts and to dampen the noise it produces when activated. The gas generator could also be located in the seat base (not shown). Durable tubing 116 provides a fluid path from gas generator 122 to inflatable braided tube 101.

As shown in Figure 1a, inflatable section 101 extends diagonally from the occupant's hip to behind and above the occupant's shoulder and is attached to torso belt 103. The upper end of inflatable section 101 loops through a D-ring 108 that is mounted to the seat 121 as shown or to the vehicle (e.g., at the roof rail or at the upper B-pillar area (not shown)). The torso belt 103 then is anchored to the seat 121 or vehicle (not shown) by an inertial retractor 118. As shown in Figure 1a, torso strap 103 is preferably routed inside the vehicle seat to inertial retractor 118, which is mounted in the lower portion of the seat back. As discussed below with reference to Figure 1d, gas generator 122 is preferably mounted inside the vehicle seat. Thus, in the configuration shown in Figures 1a and 1d, tubing 116 provides direct fluid communication from the gas generator to inflatable section 101 in the torso of the restraint system. Torso strap 103, buckle strap 107, and lap belt 102 are formed from conventional webbing material such as nylon, dacron, or polyester. Alternatively strap 107 could be a steel cable.

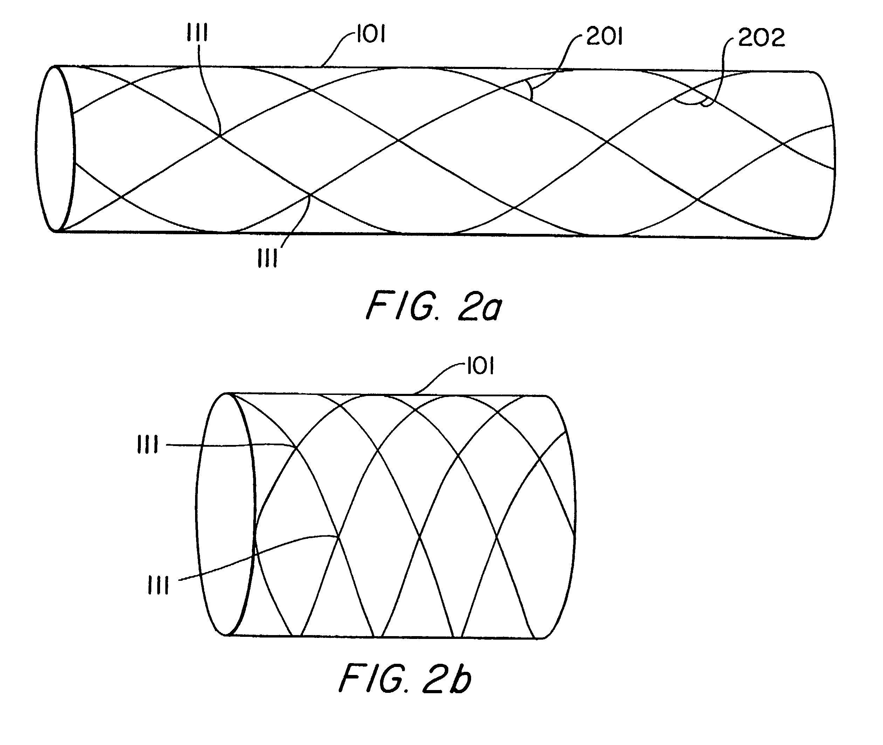

The key component of the safety belt system 110 is the inflatable braided tube 101. Braided tube 101 is integrated in the torso belt 103. The braided tube 101 is similar to the braided tubes disclosed in U.S. Patents Nos. 5,322,322 and 5,480,181. Braided tube 101 is shown in detail in Figures 2a and 2b.

Braided tube 101 is comprised of a braided tube of continuous high-strength fibers. Typical fiber materials include aramid, nylon, dacron, polyamide and polyester fibers. Braided tube 101 is made of continuous fibers that may or may not be impregnated with elastomeric material, such as silicone rubber or urethane. Unlike the conventional air bag material fibers employed in prior art, the fibers of this invention form spirals and change their orientation (included longitudinal angles) upon inflation. Prior to inflation, the spirals are stretched-out longitudinally and the tubular restraint has a relatively small diameter. Subsequent to inflation, the spirals are closer together longitudinally and form a relatively large tubular diameter. That is, upon inflation, the entire braided tube increases its diameter and decreases its length, or contracts. This contraction occurs because as the tube is inflated, the fibers seek an orientation that allows a larger volume within the tube.

As shown in Fig. 2a, angle 201 is a longitudinal angle and angle 202 is a circumferential angle. In the uninflated state, shown in Figure 2a, braided tube 101 is elongated with its woven fibers forming obtuse and acute angles at the fiber crossing points 111. For the sake of convenience and clarity, the angles which are acute in Figure 2a (which would be bisected by a line parallel to the longitudinal axis of the braided tube) will be termed the longitudinal angles. The angles which are obtuse in Figure 2a (which would be bisected by a line parallel to the circumference of the braided tube) will be termed the circumferential angles.

When the braided tube is in the uninflated state, its fibers are at a longitudinal angle m the range of about 30° to about 70°. In every case, upon inflation, the fibers will seek a preferred maximum longitudinal angle of about 110° when the tube is in an unconstrained state. Typically, the angle after inflation is approximately 100° in an unloaded, or unconstrained, braided tube. Given the range of angle from about 30° to about 70° in an uninflated tube and an angle of about 100° in an unloaded inflated tube, the range of typical length decrease, or contraction, of the inflatable tube is about 21.5% (for the 70° to 100° change) to about 33.5% (for the 30° to 100° change). The percentage of contraction is irrespective of the initial diameter or length.

The calculation for determining the amount of contraction that will occur with the present invention upon inflation and in an unconstrained condition is as follows:

$$Lf - Li = X \qquad (5)$$

where:

    X is the amount of contraction
    Lf is the length of flat, uninflated, material, and
    Li is the length of unconstrained inflated material

and

$$Li/Lf = \cos(\theta i/2)/\cos(\theta f/2) \qquad (6)$$

$$Lf - Li = Lf(1 - \cos(\theta i/2)/\cos(\theta f/2)) \qquad (7)$$

where:

    $\theta f$ is the longitudinal angle prior to inflation
    $\theta i$ is the longitudinal angle after inflation.

Merely by way of example, an embodiment of the present invention having an uninflatable flat length of 100 cm and a flat diameter of 20 cm and constructed with fibers that cross each other at a 36° angle would decrease in length, or contract, to 67 cm or by approximately 33% upon inflation in an unconstrained condition. (The calculation assumes that the angle of the fibers in an unconstrained inflated braided tube will be 100°.)

As stated above, the invention contracts as a result of both inflation and construction. Therefore, it will typically contract about 21.5% to about 33.5% as a result of the change in orientation of the fibers (construction) plus an additional percent ($Lf - Li = Df(1 - 2/\pi)$) as a result of the geometrical change from a flat belt to a cylindrical belt with hemispherical ends.

The fibers in the braided tube form clockwise and counterclockwise spirals both prior to inflation and subsequent to inflation. Prior to inflation, the spirals are stretched-out longitudinally, and have a relatively small diameter. Subsequent to inflation, the spirals are closer together longitudinally, and have a relatively large diameter. This occurs because, as the tube is inflated, the tube fibers seek an orientation that allows a larger volume within the tube, and results in lower resultant stress, with fibers aligned to roughly parallel to the orientation of the resultant stress.

Figure 2b shows that as it inflates, braided tube 101 shortens in length, while its diameter increases. The braid fibers ultimately seek an orientation in which the longitudinal angles increase substantially as the tube diameter increases. As the tube diameter increases, the tube length decreases. If the tube were unconstrained and the longitudinal angles of the tube were in the range of about 30° to about 70°, the typical range for unconstrained decrease of the tube length is about 20% to about 39%, preferably about 21.5% to about 33.5%, and most preferably about 33.5%.

The fibers in the uninflated braided tube typically have a longitudinal angle in the range of about 30° to about 70°. Upon inflation the longitudinal angle between the fibers will reach approximately 100°. The preferred maximum longitudinal inflation angle of the fibers is approximately 110°.

Figure 1a shows seat belt system 110 of the present invention in the uninflated state in which braided tube 101 assumes a flat woven belt configuration and the system acts as part of a conventional 3-point restraint. The uninflated braided tube forms a high-strength belt that has the same width (approximately 5 cm, (2 inches)) as the conventional webbing material of lap belt 102 and torso belt 103.

As best shown in Figure 1d, when a collision occurs, the crash sensor sends a signal to the initiator in gas generator 122. The initiator then ignites the gas generator 122, thus producing a gas that passes through durable tubing 116 and inflates braided tube 101. As gas flows into the chamber of braided tube 101, the internal pressure causes the tube diameter to increase and the tube length to decrease. However, the seat belt system 110 is constrained on the outboard side by the first inertial reel 117 and on the inboard side by anchor 106, and behind the shoulder by the second (shoulder or torso belt) inertial reel 118. Inertial reels 118 lock up during impact, preventing payout of the belt. Thus as braided tube 101 contracts, it pulls any slack out of seat belt system 110. The occupant is thus provided with a pretensioned seat belt. which restricts the forward motion of the occupant and reduces primary injuries.

Further, the male portion of the buckle assembly 105 can be located on the lap belt 102 using rip-stitching or a locating snap or button. When a collision occurs and upon inflation, the locating attachment between lap belt 102 and buckle 105 releases, allowing the lap portion to pull tight, thereby further restricting the motion of the occupant and preventing the occupant from sliding under the lap belt (*i.e.*, submarining).

Braided tube 101 is not stowed under any belt member. This design allows the tube to inflate evenly without experiencing roll-out problems. Seam splitting problems common to inflating bladders are also avoided because braided tube 101 is a seamless structure.

When fully inflated, braided tube 101 has a diameter of approximately 4 to 5 inches and a relative internal pressure of approximately 1 to 4 bars (2 to 5 bars absolute pressure). Due to increased friction, as the area of contact of inflated braided tube 101 with the occupant increases, inflated braided tube 101 helps to further restrict occupant motion. Unlike conventional 3-point seat belt systems, the present invention additionally helps lessen or prevent secondary belt-inflicted injuries by providing a substantially larger restraint surface area for the occupant's body, which helps to distribute belt load forces.

Additionally, the present invention provides side impact crash protection from head injury by restricting head movement, preventing the occupant's head from striking the window, the side of the vehicle, or any intruding objects.

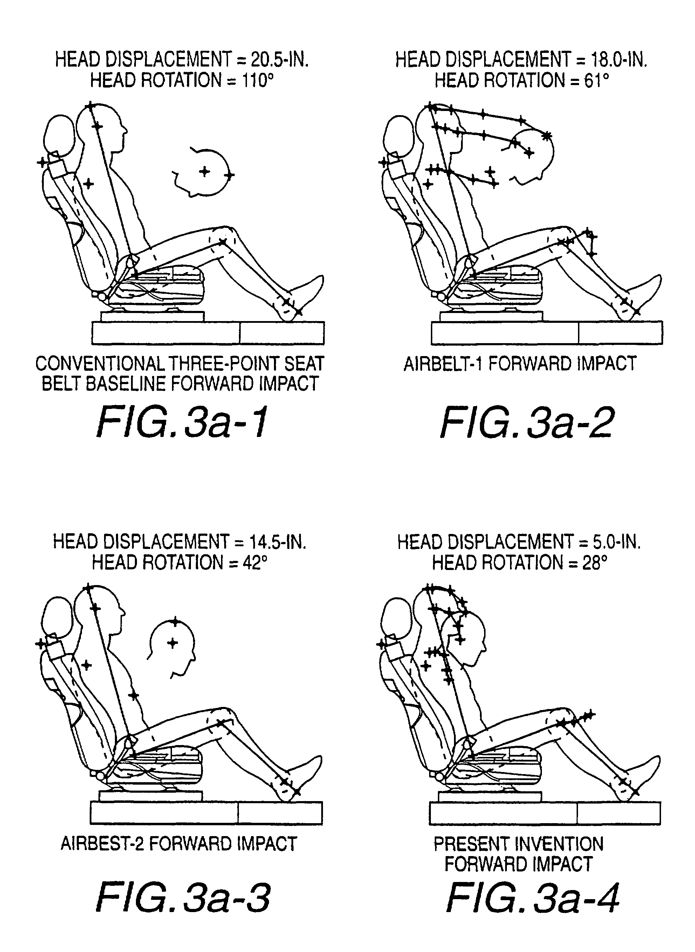

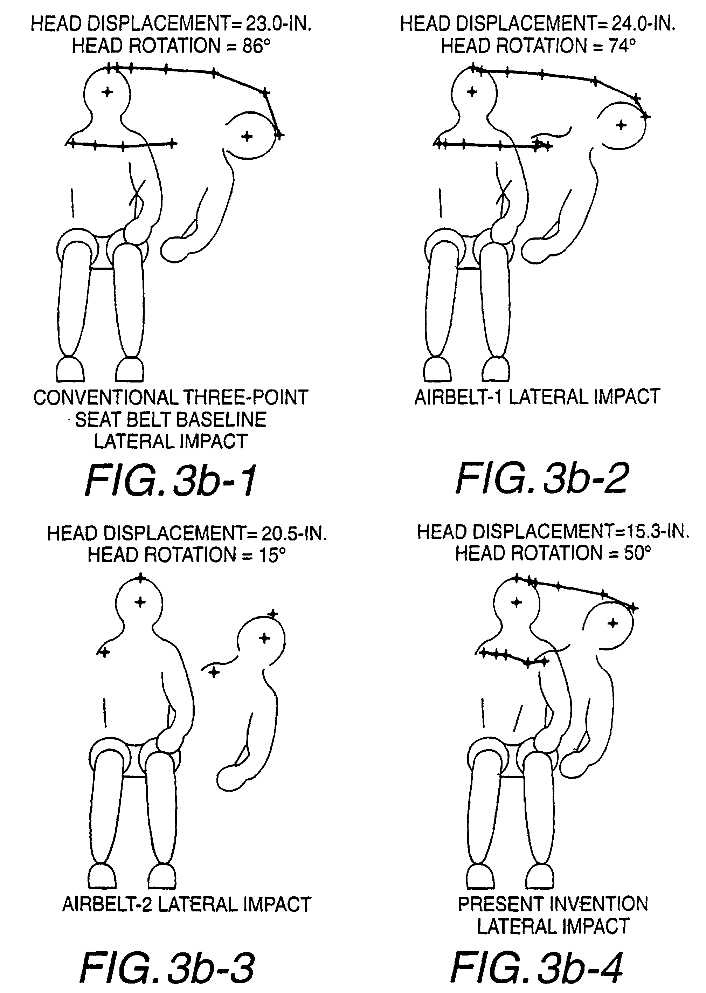

Figures 3a and 3b illustrate the results of simulated crash tests. These figures demonstrate that the present invention is more effective in limiting forward and side head displacement in frontal and side impacts, respectively, than are conventional prior art three-point seat belts and air belts fabricated from conventional materials.

The gas generator 122 used in the invention is preferably similar to those currently used in automotive side-impact as opposed to frontal air bags. This is due to the relatively smaller volume and faster filling requirements of side-impact air bags as opposed to frontal air bags. Gas generators preferred for this invention must inflate braided tube 101 to a relative pressure of approximately 1.5 bars (2.5 bars absolute) within 10 to 15 milliseconds.

The foregoing disclosure of embodiments of the present invention has been presented for purposes of illustration and description. It is not intended to be exhaustive or to limit the invention to the precise forms disclosed. Many variations and modifications of the embodiments described herein will be obvious to one of ordinary skill in the art in light of the above disclosure. For example, one obvious use of the invention is in the rear seat of automobiles. In this application the torso belt retractor could mount to the rear package shelf, C-pillar area or other structural member. The gas generator could also mount to the rear package shelf or even in the trunk of the vehicle. Of course, these components could also be mounted to the seat back structure as in the front seat application.

**Claims**

1. An occupant restraint system (110) for an occupant of a vehicle having a seat (121), the system comprising:

an inflatable torso belt (103); and
a lap belt (102)
the torso belt (103) and the lap belt (102) being connected between a first inertial reel (117) and a second inertial reel (118), and being connected to a buckle assembly (105),

wherein an inflatable portion (101) of the inflatable torso belt (103) extends through a constraint (108) adjacent to the top of the seat,

**characterised in that**;

the inflatable portion (101) comprises continuous high-strength fibres, which form spirals crossing each other at fibre crossing points (111), longitudinal angles (201) being formed between the fibres at each crossing point (111) ;

the inflatable portion (101) of the inflatable torso belt (103) reduces its length by greater than 10% when it is fully inflated in an unconstrained state, the reduction in length being caused by a change in orientation of the fibres, which increases the longitudinal angles (201) formed between the fibres; and

the inflatable portion (101) of the inflatable torso belt (103) is not vented after inflation.

2. An occupant restraint system (110) as claimed in claim 1, wherein a first portion of the buckle assembly (105) is attached to the torso belt.

3. An occupant restraint system as claimed in claim 2, wherein the first portion of the buckle assembly (105) is a male portion.

4. An occupant restraint system as claimed in claim 1, wherein a second portion of the buckle assembly (105) is anchored to the vehicle.

5. An occupant restraint system as claimed in claim 4, wherein the second portion of the buckle assembly (105) is a female portion.

6. An occupant restraint system as claimed in claim 1, wherein the first inertial reel (117) is attached to the lap belt (102).

7. An occupant restraint system as claimed in claim 6, wherein the first inertial reel (117) is attached to the lap belt (102) by a first strap.

8. An occupant restraint system as claimed in claim 6, wherein the first inertial reel (117) is anchored to the vehicle.

9. An occupant restraint system as claimed in claim 1, wherein the second inertial reel (118) is attached to the torso belt (103).

10. An occupant restraint system as claimed in claim 9, wherein the second inertial reel (118) is anchored to the vehicle.

11. An occupant restraint system as claimed in claim 1, further comprising a gas generator (122) fluidly connected to the inflatable torso belt (103).

12. An occupant restraint system as claimed in claim 1, wherein the inflatable torso belt (103) includes a belt portion extending down the back of said seat.

13. An occupant restraint system as claimed in claim 1, wherein the seat is a rear seat.

14. An occupant restraint system as claimed in claim 1, wherein when the belt (103) is in an uninflated state, the fibres form longitudinal angles (201) ranging from 30° to 70°.

15. An occupant restraint system as claimed in claim 14, wherein said longitudinal angles increase by at least 30° as the structure is inflated.

**Patentansprüche**

1. Insassenrückhaltesystem (110) für einen Insassen eines Fahrzeugs mit einem Sitz (121), das System enthaltend:

einen aufblasbaren Rumpfgurt (103); und

einen Aufwickelgurt (102),

wobei der Rumpfgurt (103) und der Aufwickelgurt (102) an eine erste Inertialaufwickelrolle (117) und eine zweite Inertialaufwickelrolle (118) angeschlossen sind und sich dazwischen erstrecken und mit einer Schlossanordnung (105) verbunden sind, wobei ein aufblasbarer Abschnitt (101) des aufblasbaren Rumpfgurts (103) sich durch eine Verengung (108) benachbart der Oberseite des Sitzes hindurch erstreckt,

**dadurch gekennzeichnet, dass**

der aufblasbare Abschnitt (101) durchgehende Fasern hoher Festigkeit aufweist, die Spiralen bilden, die einander an Faserkreuzungspunkten (111) kreuzen, wobei Längswinkel (201) zwischen den Fasern an jedem Kreuzungspunkt (111) gebildet werden;

der aufblasbare Abschnitt (101) des aufblasbaren Rumpfgurts (103) seine Länge um mehr als 10% vermindert, wenn er in einem uneingezwängten Zustand voll aufgeblasen wird, wobei die Längenverminderung durch eine Änderung der Orientierung der Fasern verursacht wird, die die Längswinkel (201) vergrößert, die zwischen den Fasern gebildet werden; und

der aufblasbare Abschnitt (101) des aufblasbaren Rumpfgurts (103) nach dem Aufblasen nicht entlüftet wird.

2. Insassenrückhaltesystem (110) nach Anspruch 1, bei dem ein erster Teil der Schlossanordnung (105) an dem Rumpfgurt befestigt ist.

**3.** Insassenrückhaltesystem nach Anspruch 2, bei dem der erste Teil der Schlossanordnung (105) ein Einsteckteil ist.

**4.** Insassenrückhaltesystem nach Anspruch 1, bei dem ein zweiter Teil der Schlossanordnung (105) an dem Fahrzeug verankert ist.

**5.** Insassenrückhaltesystem nach Anspruch 4, bei dem der zweite Teil der Schlossanordnung (105) ein Aufnahmeteil ist.

**6.** Insassenrückhaltesystem nach Anspruch 1, bei dem die erste Inertialaufwickelrolle (117) am Aufwickelgurt (102) befestigt ist.

**7.** Insassenrückhaltesystem nach Anspruch 6, bei dem die erste Inertialaufwickelrolle (117) durch ein erstes Band an dem Aufwickelgurt (102) befestigt ist.

**8.** Insassenrückhaltesystem nach Anspruch 6, bei dem die erste Inertialaufwickelrolle (117) am Fahrzeug verankert ist.

**9.** Insassenrückhaltesystem nach Anspruch 1, bei dem die zweite Inertialaufwickelrolle (118) am Rumpfgurt (103) befestigt ist.

**10.** Insassenrückhaltesystem nach Anspruch 9, bei dem die zweite Inertialaufwickelrolle (118) am Fahrzeug verankert ist.

**11.** Insassenrückhaltesystem nach Anspruch 1, weiterhin enthaltend einen Gasgenerator (102), der fluidisch mit dem aufblasbaren Rumpfgurt (103) verbunden ist.

**12.** Insassenrückhaltesystem nach Anspruch 1, bei dem der aufblasbare Rumpfgurt (103) einen Gurtabschnitt aufweist, der sich an der Rückseite des Sitzes nach unten erstreckt.

**13.** Insassenrückhaltesystem nach Anspruch 1, bei dem der Sitz ein Rücksitz ist.

**14.** Insassenrückhaltesystem nach Anspruch 1, bei dem im unaufgeblasenen Zustand des Gurts (103) die Fasern Längswinkel (201) bilden, die zwischen 30° und 70° liegen.

**15.** Insassenrückhaltesystem nach Anspruch 14, bei dem die Längswinkel um wenigstens 30° zunehmen, wenn die Struktur aufgeblasen wird.

**Revendications**

**1.** Système de retenue d'occupant (110) destiné à un occupant d'un véhicule ayant un siège (121), le système comportant :

une ceinture de torse gonflable (103), et une ceinture ventrale (102), la ceinture de torse (103) et la ceinture ventrale (102) étant connectées entre un premier enrouleur à inertie (117) et un second enrouleur à inertie (118), et étant connectées à un ensemble formant boucle (105), une partie gonflable (101) de la ceinture de torse gonflable (103) s'étendant à travers un élément de contrainte (108) en un endroit adjacent à la partie supérieure du siège,

**caractérisé en ce que**
la partie gonflable (101) comporte des fibres très résistantes continues, qui forment des spirales se recoupant les unes les autres au niveau de points de recoupement (111), des angles longitudinaux (201) étant formés entre les fibres au niveau de chaque point de recoupement (111), la longueur de la partie gonflable (101) de la ceinture de torse gonflable (103) diminue de plus de 10 % lorsqu'elle est entièrement gonflée dans un état non-contraint, la réduction de longueur étant provoquée par un changement de l'orientation des fibres, ce qui augmente les angles longitudinaux (20 1) formés entre les fibres, et la partie gonflable (101) de la ceinture de torse gonflable (103) n'est pas mise à l'air libre après gonflage.

**2.** Système de retenue d'occupant (110) selon la revendication 1, dans lequel une première partie de l'ensemble formant boucle (105) est relié à la ceinture de torse.

**3.** Système de retenue d'occupant selon la revendication 2, dans lequel la première partie de l'ensemble formant boucle (105) est une partie mâle.

**4.** Système de retenue d'occupant selon la revendication 1, dans lequel une première partie de l'ensemble formant boucle (105) est fixée sur le véhicule.

**5.** Système de retenue d'occupant selon la revendication 4, dans lequel la seconde partie de l'ensemble formant boucle (105) est une partie femelle.

**6.** Système de retenue d'occupant selon la revendication 1, dans lequel le premier enrouleur à inertie (117) est relié à la ceinture ventrale (102).

**7.** Système de retenue d'occupant selon la revendication 6, dans lequel le premier enrouleur à inertie (117) est relié à la ceinture ventrale (102) par l'intermédiaire d'une première sangle.

8. Système de retenue d'occupant selon la revendication 6, dans lequel le premier enrouleur à inertie (117) est fixé sur le véhicule.

9. Système de retenue d'occupant selon la revendication 1, dans lequel le second enrouleur à inertie (118) est relié à la ceinture de torse (103).

10. Système de retenue d'occupant selon la revendication 9, dans lequel le second enrouleur à inertie (118) est fixé sur le véhicule.

11. Système de retenue d'occupant selon la revendication 1, comportant en outre un générateur de gaz (122) connecté de manière fluide à la ceinture de torse gonflable (103).

12. Système de retenue d'occupant selon la revendication 1, dans lequel la ceinture de torse gonflable (103) comporte une partie de ceinture s'étendant vers le bas du dossier dudit siège.

13. Système de retenue d'occupant selon la revendication 1, dans lequel le siège est un siège arrière.

14. Système de retenue d'occupant selon la revendication 1, dans lequel lorsque la ceinture (103) est dans un état non-gonflé, les fibres forment des angles longitudinaux (201) situés dans la plage allant de 30° à 70°.

15. Système de retenue d'occupant selon la revendication 14, dans lequel lesdits angles longitudinaux augmentent d'au moins 30° lorsque la structure est gonflée.

*FIG. 1a*

*FIG. 1b*

*FIG. 1c*

*FIG. 1d*

*FIG. 1e*

FIG. 2a

FIG. 2b

HEAD DISPLACEMENT = 20.5-IN.
HEAD ROTATION = 110°

CONVENTIONAL THREE-POINT SEAT
BELT BASELINE FORWARD IMPACT

*FIG. 3a-1*

HEAD DISPLACEMENT = 18.0-IN.
HEAD ROTATION = 61°

AIRBELT-1 FORWARD IMPACT

*FIG. 3a-2*

HEAD DISPLACEMENT = 14.5-IN.
HEAD ROTATION = 42°

AIRBEST-2 FORWARD IMPACT

*FIG. 3a-3*

HEAD DISPLACEMENT = 5.0-IN.
HEAD ROTATION = 28°

PRESENT INVENTION
FORWARD IMPACT

*FIG. 3a-4*

HEAD DISPLACEMENT= 23.0-IN.
HEAD ROTATION = 86°

CONVENTIONAL THREE-POINT
SEAT BELT BASELINE
LATERAL IMPACT

*FIG. 3b-1*

HEAD DISPLACEMENT= 24.0-IN.
HEAD ROTATION = 74°

AIRBELT-1 LATERAL IMPACT

*FIG. 3b-2*

HEAD DISPLACEMENT= 20.5-IN.
HEAD ROTATION = 15°

AIRBELT-2 LATERAL IMPACT

*FIG. 3b-3*

HEAD DISPLACEMENT=15.3-IN.
HEAD ROTATION = 50°

PRESENT INVENTION
LATERAL IMPACT

*FIG. 3b-4*